# FASCICULE DE BREVET EUROPEEN

(11) **EP 2 008 559 B1**
(45) Date de publication et mention de la délivrance du brevet: **15.09.2010**
(21) Numéro de dépôt: 08356092.0
(22) Date de dépôt: 18.06.2008
(51) Int. Cl.: A47J 43/07

(54) **Appareil de préparation culinaire comportant un dispositif de sécurité simplifié**
Apparat zur Essenszubereitung, der mit einer vereinfachten Sicherheitsvorrichtung ausgestattet ist
Cooking appliance comprising a simplified safety system

(30) Priorité: 26.06.2007 FR 0704570
(43) Date de publication de la demande: 31.12.2008
(73) Titulaire: SEB S.A., 69130 Ecully (FR)
(72) Inventeur: Rouyer, Philippe, 65290 Juillan (FR); Bordes, Jean-Luc, 65100 Adé (FR); Suberbie, Nicolas, 65000 Tarbes (FR)
(74) Mandataire: Kiehl, Hubert

(56) Documents cités:
- WO-A-01/74214
- DE-A1- 2 819 568
- DE-A1- 3 335 139
- FR-A- 2 761 251

## Description

La présente invention concerne le domaine technique des appareils de préparation culinaire comportant un boîtier, un récipient de travail monté amovible sur le boîtier, un outil de travail rotatif monté amovible dans le récipient de travail, et un couvercle coiffant le récipient de travail, dans lequel le couvercle est prévu pour former un dispositif de commande.

Un appareil de préparation culinaire du type précité est connu du document FR 2 442 034. Le couvercle présente une partie inférieure entourant un socle formé sur le boîtier. Le couvercle présente une patte latérale prévue pour être engagée dans une ouverture supérieure du boîtier disposée latéralement par rapport au socle. Une telle réalisation est susceptible d'être utilisée en l'absence du récipient de travail sans que l'outil de travail rotatif présente un danger pour l'utilisateur, du fait de la hauteur important de la partie inférieure entourant le socle. Cette réalisation a toutefois pour inconvénient de nécessiter un boîtier plus large que la zone de réception du couvercle, et un emboîtement suffisamment haut du couvercle sur le boîtier.

Un appareil de préparation culinaire du type précité commercialisé par la déposante comporte un couvercle présentant une partie inférieure insérée à l'intérieur d'un rebord annulaire supérieur du boîtier. Le bord inférieur du couvercle est prévu pour actionner, par l'intermédiaire d'une tige de commande, un interrupteur logé dans le boîtier, et par l'intermédiaire d'une autre tige de commande disposée à 120° de la première tige de commande, un autre interrupteur logé dans le boîtier. La hauteur du rebord annulaire supérieur du boîtier étant réduite, la présence : de deux interrupteurs suffisamment espacés angulairement permet d'éviter un fonctionnement de l'appareil lorsque le couvercle mis en place de manière inclinée sur le boîtier ménage un espace avec le boîtier. Une telle configuration serait en effet dangereuse en l'absence du récipient de travail. Cette réalisation permet d'utiliser un boîtier correspondant à la zone de réception du couvercle, ainsi qu'un emboîtement de hauteur limitée entre le couvercle et le boîtier. Toutefois, une telle réalisation nécessite l'utilisation d'un interrupteur supplémentaire.

Un appareil selon le préambule de la revendication 1 est connu du document DE 28 19 568.

Un but de la présente invention est de proposer un appareil de préparation culinaire du type précité présentant un dispositif de sécurité de construction économique, et qui soit facile à utiliser.

Un autre but de la présente invention est de proposer un appareil de préparation culinaire du type précité présentant un dispositif de sécurité de construction économique, ainsi qu'un emboîtement de hauteur limitée entre le couvercle et le boîtier.

Les buts assignés à l'invention sont atteints avec un appareil selon les caractéristiques de la revendication 1.

De ce fait, l'organe de sécurité inférieur coopérant avec une partie supérieure de l'outil de travail rotatif provoque une inclinaison du couvercle sur le boîtier écartant le bord périphérique inférieur de la position de fonctionnement abaissée de l'élément de commande. En d'autres termes le bord périphérique inférieur du couvercle s'étend à distance de la position abaissée de fonctionnement de l'élément de commande lorsque le couvercle est incliné par rapport au boîtier et que l'organe de sécurité inférieur coopère avec la partie supérieure de l'outil de travail rotatif. L'organe de sécurité inférieur du couvercle coopérant avec l'outil de travail rotatif empêche l'introduction du bord périphérique inférieur du couvercle dans la rainure de guidage latérale, du fait de l'inclinaison du couvercle ainsi provoquée. Ainsi le bord périphérique inférieur du couvercle est inapte à déplacer l'élément de commande vers ia position abaissée de fonctionnement lorsque le couvercle est incliné par rapport au boîtier et que l'organe de sécurité inférieur coopère avec une partie supérieure de l'outil de travail rotatif. L'utilisateur peut réaliser facilement que le couvercle n'a pas été correctement positionné. Lorsque le couvercle est incliné par rapport au boîtier, un passage latéral peut apparaître entre le couvercle et le boîtier. La présente invention permet d'éviter le fonctionnement de l'appareil lorsqu'un tel passage latéral est formé. Lorsque le couvercle est en place sur le boîtier, l'organe de sécurité inférieur du couvercle autorise la rotation de l'outil de travail rotatif et le bord périphérique inférieur du couvercle peut déplacer l'élément de commande vers la position abaissée de fonctionnement. Le dispositif de sécurité proposé est particulièrement économique car aucune pièce mobile additionnelle n'est nécessaire. La hauteur d'emboîtement du couvercle avec le boîtier peut être limitée. L'appareil est d'une utilisation particulièrement simple et conviviale.

Selon une forme de réalisation avantageuse, le bord périphérique inférieur est inapte à atteindre l'élément de commande lorsque le couvercle est incliné par rapport au boîtier et que l'organe de sécurité inférieur coopère avec la partie supérieure de l'outil de travail rotatif.

Selon une autre forme de réalisation, le bord périphérique inférieur pourrait atteindre l'élément de commande lorsque le couvercle est incliné par rapport au boîtier et que l'organe de sécurité inférieur coopère avec la partie supérieure de l'outil de travail rotatif, sans pour autant pouvoir déplacer l'élément de commande vers la position abaissée de fonctionnement.

Avantageusement, l'inclinaison du couvercle en place sur le boîtier est limitée par un organe de sécurité latéral du couvercle coopérant avec une partie latérale de l'outil de travail rotatif. En d'autres termes, lorsque le couvercle initialement disposé axialement sur le boîtier est incliné par l'utilisateur, l'organe de sécurité latéral coopérant avec la partie latérale de l'outil de travail rotatif permet de limiter l'inclinaison du couvercle et d'éviter l'apparition d'un passage latéral entre le couvercle et le boîtier susceptible de rendre l'appareil dangereux. Cette disposition permet d'éviter l'apparition d'un passage latéral entre le couvercle et le boîtier lorsque ie couvercle disposé sur le boîtier est incliné volontairement ou non par rapport à la disposition axiale.

Selon une forme de réalisation préférée, l'élément de commande est adjacent à un bord périphérique supérieur du boîtier. En alternative, l'élément de commande peut notamment être disposé à proximité d'un bord supérieur du boîtier ou dans une cavité supérieure du boîtier.

Selon une forme de réalisation, le bord périphérique inférieur du couvercle est inséré à l'intérieur du bord périphérique supérieur du boîtier. En alternative, le bord périphérique inférieur du couvercle pourrait notamment entourer le bord périphérique supérieur du boîtier.

Selon une forme de réalisation préférée, le bord périphérique inférieur du couvercle présente une géométrie circulaire.

Plus particulièrement, le bord périphérique inférieur du couvercle est susceptible de prendre appui sur une protubérance interne agencée dans la rainure de guidage latérale sans actionner l'élément de commande vers la position abaissée de fonctionnement lorsque le couvercle est incliné par rapport au boîtier et que l'organe de sécurité inférieur coopère avec la partie supérieure de l'outil de travail rotatif. La protubérance interne permet un arrêt plus sûr du couvercle en bloquant le bord périphérique inférieur du couvercle.

Plus particulièrement encore, le bord périphérique inférieur du couvercle est susceptible de prendre appui sur deux protubérances internes agencées de part et d'autre de l'élément de commande dans la rainure de guidage latérale sans actionner l'élément de commande vers la position abaissée de fonctionnement lorsque le couvercle est incliné par rapport au boîtier et que l'organe de sécurité inférieur coopère avec la partie supérieure de l'outil de travail rotatif. L'élément de commande encadré par les protubérances internes est ainsi protégé de l'actionnement du bord périphérique inférieur du couvercle lorsque le couvercle est incliné de manière importante par rapport au boîtier du fait du contact entre l'organe de sécurité inférieur et l'outil de travail rotatif. L'appareil de préparation culinaire est ainsi particulièrement sûr.

Selon une forme de réalisation, l'organe de sécurité inférieur entoure la partie supérieure de l'outil de travail rotatif lorsque le couvercle repose sur le boîtier. En alternative, l'organe de sécurité pourrait notamment être inséré au moins partiellement dans la partie supérieure de l'outil de travail rotatif lorsque le couvercle repose sur le boîtier.

Selon une forme de réalisation, l'axe d'entraînement est proéminent par rapport à une face supérieure du boîtier. En alternative, l'axe d'entraînement pourrait notamment être agencé dans une cavité en dessous d'une face supérieure du boîtier.

Selon une forme de réalisation préférée, le couvercle peut être mis en place sur le boîtier sans orientation angulaire particulière.

Selon une forme de réalisation, le boîtier comporte un moteur électrique piloté par un interrupteur commandé par l'élément de commande. L'appareil de préparation culinaire est alors un appareil électroménager de préparation culinaire. En alternative, le boîtier pourrait être monté sur une base moteur comportant un moteur électrique piloté par un interrupteur commandé par l'élément de commande, tel que décrit par exemple dans le document FR 2 442 034.

Selon une forme de réalisation avantageuse, l'élément de commande est monté mobile contre un ressort de rappel. En alternative, le ressort de rappel pourrait notamment appartenir à l'interrupteur et/ou d'autres moyens de rappel pourraient être envisagés.

Avantageusement alors, le bord périphérique inférieur du couvercle disposé axialement sur le boîtier repose sur l'élément de commande et sur deux autres éléments suspenseurs. Le couvercle est ainsi suspendu sur le boîtier et peut être déplacé contre l'élément de commande et les deux autres éléments suspenseurs selon la direction axiale.

De préférence alors, l'élément de commande et les deux autres éléments suspenseurs sont espacés de 120° les uns des autres.

L'invention sera mieux comprise à l'étude d'un mode de réalisation, pris à titre nullement limitatif, illustré dans les figures annexées, dans lesquelles :
- la figure 1 est une vue en coupe d'un appareil de préparation culinaire selon l'invention, en position de repos,
- la figure 2 est une vue en perspective de la base de l'appareil illustré sur la figure 1,
- la figure 3 montre un détail de la figure 2,
- la figure 4 est une vue de côté en coupe partielle de la base montrée sur la figure 2,
- la figure 5 est une vue en coupe de l'appareil illustré sur la figure 1, dans une utilisation anormale sans récipient de travail, dans une configuration dans laquelle l'appareil est susceptible de fonctionner,
- la figure 6 illustre un détail d'une vue en coupe légèrement décalée par rapport à la coupe de la figure 5,
- la figure 7 est une vue en coupe de l'appareil illustré sur les figures 1 et 5, dans une utilisation anormale sans récipient de travail dans une configuration dans laquelle l'appareil n'est pas susceptible de fonctionner,
- la figure 8 illustre un détail d'une vue en coupe légèrement décalée par rapport à la coupe de la figure 7, avec un couvercle davantage incliné.

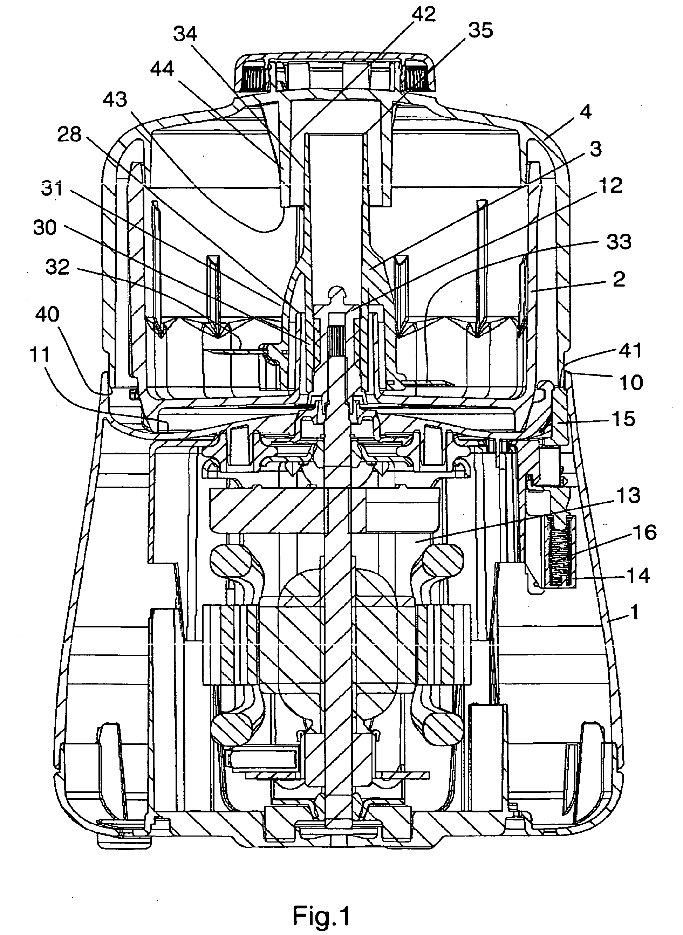

L'appareil de préparation culinaire illustré sur la figure 1 comporte un boîtier 1, un récipient de travail 2 monté amovible sur le boîtier, un outil de travail rotatif 3 monté amovible dans le récipient de travail 2, et un couvercle 4 coiffant le récipient de travail 2.

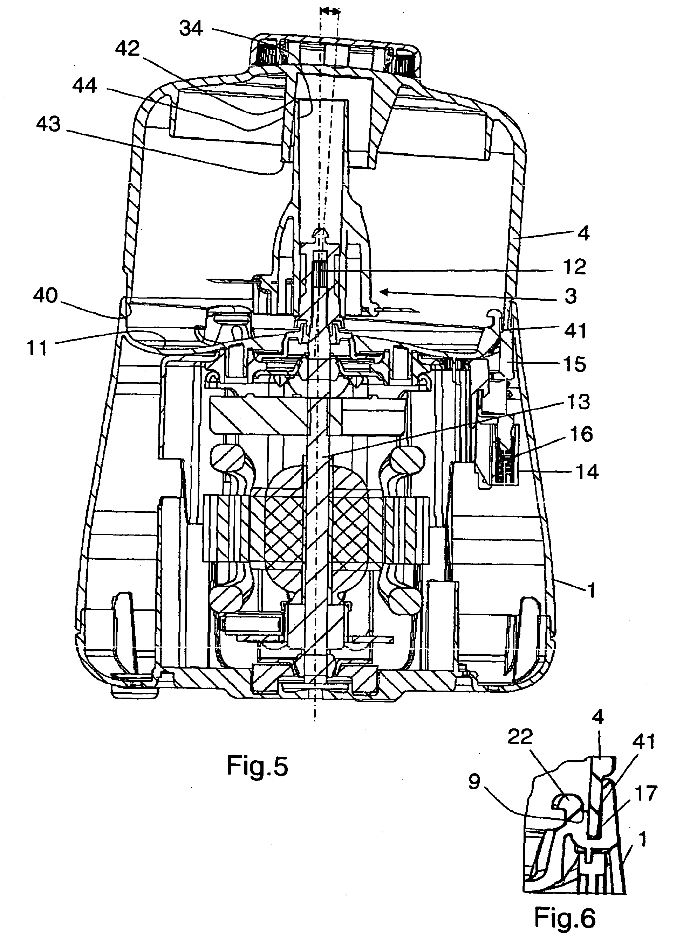

En d'autres termes, le couvercle 4 est monté amovible sur le boîtier 1, sur le récipient de travail 2 et sur l'outil de travail rotatif 3. Plus particulièrement, le couvercle 4 et le boîtier 1 forment une enceinte logeant le récipient de travail 2, tel que bien visible sur les figures 1 et 5.

Le boîtier 1 présente un bord périphérique supérieur 10 entourant une face supérieure 11. Le boîtier 1 présente un axe d'entraînement 12 prévu pour recevoir l'outil de travail rotatif 3. L'axe d'entraînement 12 est proéminent par rapport à la face supérieure 11 du boîtier 1. Le boîtier 1 comporte un moteur électrique 13 piloté par un interrupteur 14 commandé par un élément de commande 15.

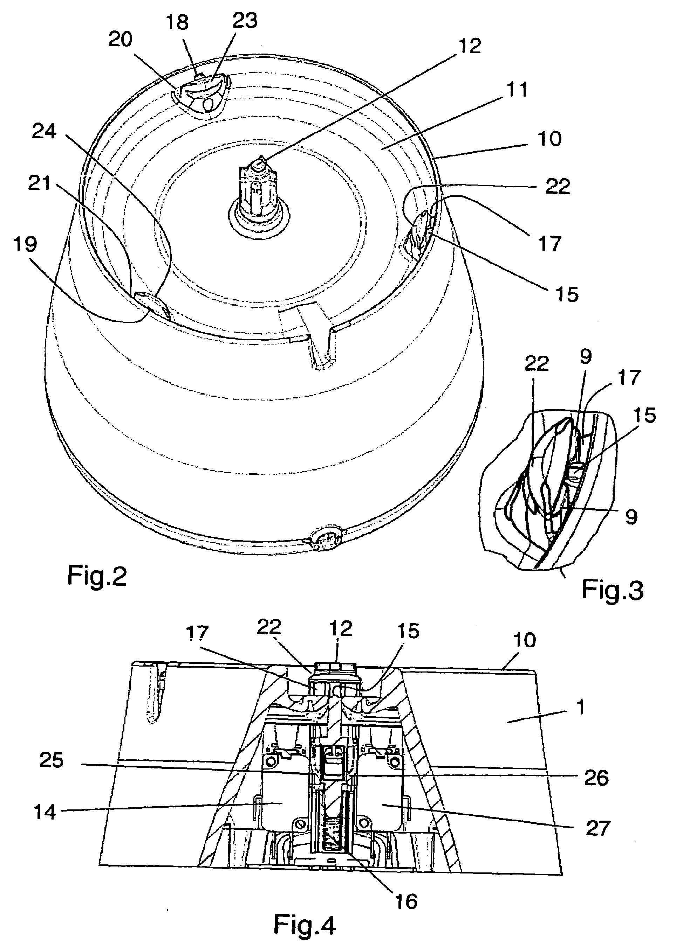

L'élément de commande 15 est mobile entre une position relevée de repos, illustrée sur la figure 1, et une position abaissée de fonctionnement, illustrée sur la figure 4. L'élément de commande 15 est prévu pour coopérer avec le couvercle 4. L'élément de commande 15 est monté mobile contre un ressort de rappel 16. L'élément de commande 15 forme ainsi un élément suspenseur.

Dans le mode de réalisation proposé, l'élément de commande 15 est adjacent au bord périphérique supérieur 10 du boîtier 1. Plus particulièrement, tel que mieux visible sur les figures 2 et 3, l'élément de commande 15 est agencé dans une rainure de guidage latérale 17. Deux protubérances latérales 9 sont agencées dans la rainure de guidage latérale 17 de part et d'autre de l'élément de commande 15, tel que mieux visible sur la figure 3.

Deux autres éléments suspenseurs 18, 19 sont agencés dans deux autres rainures de guidage latérales 20, 21. Les deux autres éléments suspenseurs 18, 19 sont également montés mobiles chacun contre un ressort de rappel, non visible sur les figures. L'élément de commande 15 et les deux autres éléments suspenseurs 18, 19 sont espacés de 120° les uns des autres.

La rainure de guidage latérale 17 et les autres rainures de guidage latérales 20, 21 sont formées d'une part par le bord périphérique supérieur 10 du boîtier 1 et d'autre part par des protubérances supérieures 22, 23, 24 issues de la face supérieure 11 du boîtier 1. Le bord périphérique supérieur 10 entoure les protubérances supérieures 22, 23, 24. Les protubérances latérales 9 sont ménagées sur la paroi interne de la protubérance supérieure 22 formant la rainure de guidage latérale 17.

Plus particulièrement, tel que mieux visible sur la figure 4, l'élément de commande 15 comporte une première surface de came 25 prévue pour actionner l'interrupteur 14 et une deuxième surface de came 26 prévue pour actionner un inverseur 27.

Tel que visible sur la figure 1, le récipient de travail 2 comporte une cheminée axiale 28 prévue pour le passage de l'axe d'entraînement 12. L'outil de travail rotatif 3 présente une partie inférieure 30 montée sur l'axe d'entraînement 12. La partie inférieure 30 est agencée dans la cheminée axiale 28. L'outil de travail rotatif 3 présente une jupe 31 coiffant la cheminée axiale 28. La jupe 31 porte deux lames 32, 33.

Le couvercle 4 comporte un organe de commande 40 prévu pour actionner l'élément de commande 15, notamment lorsque le couvercle 4 est disposé axialement sur le boîtier 1, tel que représenté sur la figure 1. L'organe de commande 40 est formé par un bord périphérique inférieur 41 du couvercle 4. Le bord périphérique inférieur 41 du couvercle 4 présente avantageusement une géométrie circulaire, de sorte que le couvercle 4 peut être disposé sur le boîtier 1 sans orientation angulaire particulière. La rainure de guidage latérale 17 est prévue pour recevoir le bord périphérique inférieur 41 du couvercle 4 disposé axialement sur le boîtier 1. Les autres rainures de guidage latérales 20, 21 sont également prévues pour recevoir le bord périphérique inférieur 41 du couvercle 4 disposé axialement sur le boîtier 1.

Le couvercle 4 comporte un organe de sécurité latéral 42 autorisant la rotation de l'outil de travail rotatif 3 lorsque le couvercle est en place sur le boîtier, tel que représenté sur la figure 1. L'organe de sécurité latéral 42 est susceptible de coopérer avec une partie latérale 34 de l'outil de travail rotatif 3, lorsque le couvercle 4 mis en place sur le boîtier 1 est incliné, tel que représenté sur la figure 5.

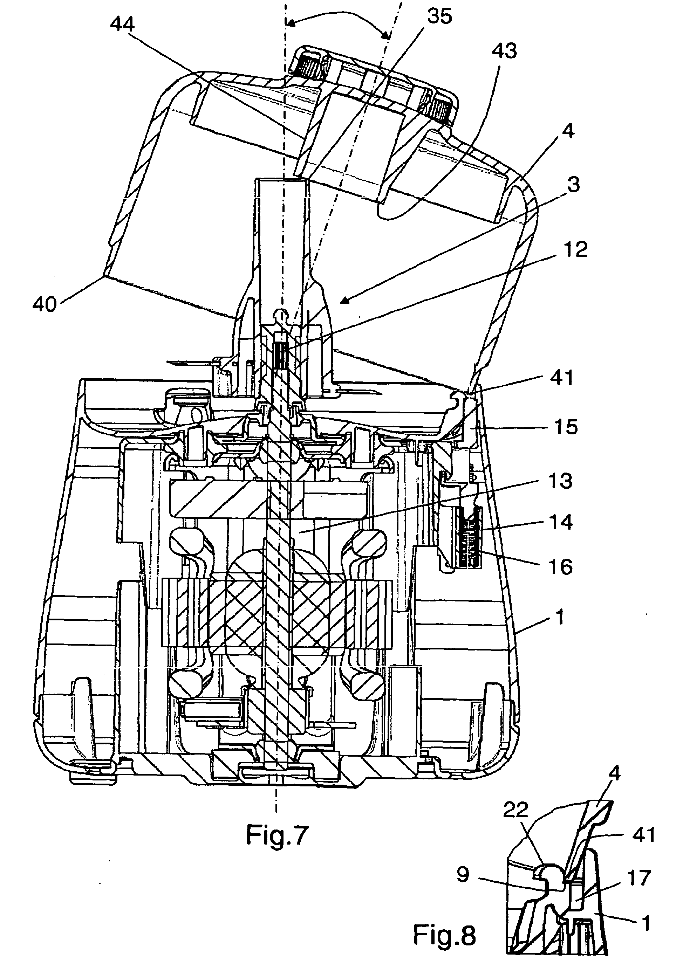

Le couvercle 4 comporte un organe de sécurité inférieur 43 laissant l'outil de travail rotatif 3 libre en rotation lorsque le couvercle 4 est en place sur le boîtier 1, tel que représenté sur la figure 1. Plus particulièrement, l'organe de sécurité inférieur 43 entoure la partie supérieure 35 de l'outil de travail rotatif 3 lorsque le couvercle 4 est disposé axialement sur le boîtier 1. L'organe de sécurité inférieur est susceptible de coopérer avec une partie supérieure 35 de l'outil de travail rotatif 3 lorsque le couvercle 4 est mis en place de manière inclinée sur le boîtier 1 tel que représenté sur la figure 7. L'organe de sécurité inférieur 43 coopérant avec la partie supérieure 35 de l'outil de travail rotatif 3 provoque une inclinaison du couvercle 4 sur le boîtier 1 écartant le bord périphérique inférieur 41 de la position abaissée de fonctionnement de l'élément de commande 15.

Plus particulièrement, l'organe de sécurité latéral 42 et l'organe de sécurité inférieur 43 appartiennent à une conformation tubulaire 44 issue de la face inférieure du couvercle 4.

Tel que représenté sur la figure 1, la conformation tubulaire 44 entoure à distance la partie latérale 34 et la partie supérieure 35 de l'outil de travail rotatif 3 lorsque le couvercle 4 est disposé axialement sur le boîtier 1.

Ainsi tel que bien visible sur les figures 1 et 2, l'appareil de préparation culinaire comporte le couvercle 4 coiffant le récipient de travail 2 monté amovible sur le boîtier 1 présentant l'axe d'entraînement 12 prévu pour recevoir l'outil de travail rotatif 3 monté amovible dans le récipient de travail 2 ; le couvercle 4 est indépendant de l'outil de travail rotatif 3; le couvercle 4 comporte l'organe de commande 40 formé par le bord périphérique inférieur 41, l'organe de commande 40 étant prévu pour actionner l'élément de commande 15 mobile entre une position de repos et une position de fonctionnement, et plus particulièrement mobile entre une position relevée de repos et une position abaissée de fonctionnement.

La présente invention fonctionne et s'utilise de la manière suivante.

Lors d'une utilisation normale, l'utilisateur dispose le couvercle 4 axialement sur le boîtier 1, tel que représenté sur la figure 1. Le couvercle 4 comporte l'organe de sécurité inférieur 43 laissant l'outil de travail rotatif 3 libre en rotation sur l'axe d'entraînement 12 lorsque le couvercle 4 est en place sur le boîtier 1, tel que bien visible sur la figure 1. Le bord périphérique inférieur 41 du couvercle 4 repose alors sur l'élément de commande 15 et sur les deux autres éléments suspenseurs 18, 19. L'élément de commande 15 occupe la position relevée de repos. Le bord périphérique inférieur 41 du couvercle 4 est inséré à l'intérieur du bord périphérique supérieur 10 du boîtier 1. L'organe de sécurité inférieur 43 du couvercle 4 entoure la partie supérieure 35 de l'outil de travail rotatif 3 lorsque le couvercle 4 repose sur le boîtier 1.

Pour faire fonctionner l'appareil, l'utilisateur appuie sur le dessus du couvercle 4 pour déplacer l'élément de commande 15 contre le ressort de rappel 16 et les deux autres éléments suspenseurs 18,19 contre leurs ressorts de rappel respectifs. L'élément de commande 15 actionne l'interrupteur 14 avec la première surface de came 25 puis l'inverseur 27 avec la deuxième surface de came 26 lorsque le couvercle 4 est repoussé contre le boîtier 1. L'élément de commande 15 occupe la position abaissée de fonctionnement.

Lorsque l'utilisateur relâche le couvercle 4, le ressort de rappel 16 repousse l'élément de commande 15. La première surface de came 25 libère l'interrupteur 14. L'alimentation du moteur 13 est coupée. La deuxième surface de came 26 actionne ensuite l'inverseur 27. Les branchements électriques de l'une des bobines du moteur 13 sont alors inversés, ce qui a pour effet de freiner rapidement l'axe d'entraînement 12 portant l'outil de travail rotatif 3.

Lorsque l'élément de commande 15 occupe la position relevée de repos illustrée sur la figure 1, le couvercle 4 disposé axialement sur le boîtier 1 protège l'accès à l'intérieur de l'appareil logeant le récipient de travail 2 et l'outil de travail rotatif 3.

Une utilisation anormale peut survenir si l'utilisateur oublie de disposer le récipient de travail 2 sur le boîtier 1 et monte directement l'outil de travail rotatif 3 sur l'axe d'entraînement 12.

Lorsque le couvercle 4 est simplement disposé sur le boîtier 1, le bord périphérique inférieur 41 du couvercle 4 est engagé à l'intérieur du bord périphérique supérieur 10 du boîtier 1, tel que représenté sur la figure 1. L'utilisateur ne peut accéder à l'outil de travail rotatif 3 malgré l'absence du récipient de travail 2.

Lorsque le couvercle 4 est déplacé axialement vers le boîtier 1, le bord périphérique inférieur 41 du couvercle 4 reste engagé à l'intérieur du bord périphérique supérieur 10 du boîtier 1. L'utilisateur ne peut davantage accéder à l'outil de travail rotatif 3 malgré l'absence du récipient de travail 2.

Toutefois, si le couvercle 4 est déplacé vers le boîtier 1 avec une inclinaison par rapport à la direction axiale, l'inclinaison du couvercle 4 en place sur le boîtier 1 est limitée par l'organe de sécurité latéral 42 du couvercle 4 coopérant avec la partie latérale 34 de l'outil de travail rotatif 3, tel que montré sur la figure 5. Ainsi le bord périphérique inférieur 41 du couvercle 4 reste engagé à l'intérieur du bord périphérique supérieur 10 du boîtier 1.

Tel que visible sur la figure 5, le bord périphérique inférieur 41 actionne l'élément de commande 15. Tel que visible sur la figure 6, le bord périphérique inférieur 41 est engagé dans la rainure de guidage latérale 17. L'utilisateur ne peut accéder à l'outil de travail rotatif 3 malgré l'absence du récipient de travail 2 lorsque le bord périphérique inférieur 41 du couvercle 4 actionne l'élément de commande 15 vers la position abaissée de fonctionnement.

Lorsque le couvercle 4 est disposé avec une inclinaison plus prononcée sur le boîtier 1, tel que représenté sur les figures 7 et 8, l'organe de sécurité inférieur 43 du couvercle 4 coopère avec la partie supérieure 35 de l'outil de travail rotatif 3. Le bord périphérique inférieur 41 du couvercle 4 prend appui contre une paroi de la rainure de guidage latérale 17 sans actionner l'élément de commande 15 vers la position abaissée de fonctionnement lorsque le couvercle 4 est incliné par rapport au boîtier 1 et que l'organe de sécurité inférieur 43 coopère avec la partie supérieure 35 de l'outil de travail rotatif 3.

Ainsi le bord périphérique inférieur 41 formant l'organe de commande 40 est inapte à déplacer l'élément de commande 15 vers la position abaissée de fonctionnement lorsque le couvercle 4 est incliné par rapport au boîtier 1 et que l'organe de sécurité inférieur 43 coopère avec la partie supérieure 35 de l'outil de travail rotatif 3. Le bord périphérique inférieur 41 du couvercle 4 ménage un passage latéral avec le bord périphérique supérieur 10 du boîtier 1 vers l'outil de travail rotatif 3, mais l'appareil ne peut fonctionner.

Plus particulièrement, tel que montré sur la figure 7, le bord périphérique inférieur 41 du couvercle 4 est susceptible de prendre appui contre le bord périphérique supérieur 10 du boîtier 1 sans actionner l'élément de commande 15 vers la position abaissée de fonctionnement lorsque le couvercle 4 est incliné par rapport au boîtier 1 et que l'organe de sécurité inférieur 43 coopère avec la partie supérieure 35 de l'outil de travail rotatif 3.

Plus particulièrement, tel que montré sur la figure 8, le bord périphérique inférieur 41 du couvercle 4 est susceptible de prendre appui sur l'une des protubérances internes 9 agencées dans la rainure de guidage latérale 17 sans actionner l'élément de commande 15 vers la position abaissée de fonctionnement, lorsque le couvercle 4 est incliné par rapport au boîtier 1 et que l'organe de sécurité inférieur 43 coopère avec la partie supérieure 35 de l'outil de travail rotatif 3. Ladite protubérance interne 9 forme ainsi une butée.

Le bord périphérique inférieur 41 du couvercle 4 est aussi susceptible de prendre appui sur les deux protubérances internes 9 agencées dans la rainure de guidage latérale 17 sans actionner l'élément de commande 15 vers la position abaissée de fonctionnement, lorsque le couvercle 4 est incliné par rapport au boîtier 1 et que l'organe de sécurité inférieur 43 coopère avec la partie supérieure 35 de l'outil de travail rotatif 3.

Ainsi l'organe de sécurité inférieur 4 coopérant avec la partie supérieure 35 de l'outil de travail rotatif 3 en place sur l'axe d'entraînement 12 provoque une inclinaison du couvercle 4 sur le boîtier 1 écartant le bord périphérique inférieur 41 du couvercle 4 de la position abaissée de fonctionnement de l'élément de commande 15, tel que bien visible sur les figures 7 et 8.

L'appareil ainsi obtenu présente un dispositif de sécurité particulièrement simple et efficace. Un emboîtement de hauteur importante entre le couvercle 4 et le boîtier 1 n'est plus nécessaire pour assurer la sécurité. L'utilisation de l'appareil est particulièrement simple, sûre et conviviale.

A titre de variante, le bord périphérique inférieur 41 du couvercle 4 n'est pas nécessairement inséré à l'intérieur du bord périphérique supérieur 10 du boîtier 1. En alternative, le bord périphérique inférieur du couvercle pourrait notamment entourer le bord périphérique supérieur du boîtier.

A titre de variante, l'organe de sécurité inférieur 43 n'entoure pas nécessairement la partie supérieure de l'outil de travail rotatif 3 lorsque le couvercle 4 repose sur le boîtier 1. En alternative, l'organe de sécurité pourrait notamment être inséré au moins partiellement dans la partie supérieure de l'outil de travail rotatif lorsque le couvercle repose sur le boîtier.

A titre de variante, l'axe d'entraînement 12 n'est pas nécessairement proéminent par rapport à la face supérieure 11 du boîtier 1. En alternative, l'axe d'entraînement pourrait notamment être agencé dans une cavité en dessous d'une face supérieure du boîtier.

A titre de variante, l'élément de commande 15 n'est pas nécessairement adjacent à un bord périphérique supérieur 10 du boîtier 1. L'élément de commande 15 pourrait notamment être disposé à proximité d'un bord supérieur du boîtier ou dans une cavité supérieure du boîtier.

A titre de variante, l'élément de commande 15 n'est pas nécessairement monté dans le boîtier 1.

A titre de variante, le boîtier 1 ne comporte pas nécessairement un moteur électrique piloté par un interrupteur commandé par un élément de commande. Le boîtier 1 pourrait notamment être monté sur une base moteur comportant un moteur électrique piloté par un interrupteur commandé par l'élément de commande. L'élément de commande peut alors appartenir ou non à la base moteur.

A titre de variante, le bord périphérique inférieur 41 pourrait atteindre l'élément de commande 15 lorsque le couvercle 4 est incliné par rapport au boîtier 1 et que l'organe de sécurité inférieur 43 coopère avec la partie supérieure 35 de l'outil de travail rotatif 3, sans pour autant pouvoir déplacer l'élément de commande 15 vers la position abaissée de fonctionnement.

A titre de variante, le couvercle 4 n'est pas nécessairement mis en place sur le boîtier 1 sans orientation angulaire particulière.

A titre de variante, l'élément de commande 15 mobile entre une position relevée de repos et une position abaissée de fonctionnement n'est pas nécessairement mobile selon une direction strictement verticale.

La présente invention n'est nullement limitée au mode de réalisation décrit et à ses variantes, mais englobe de nombreuses modifications dans le cadre des revendications.

## Revendications

1. Appareil de préparation culinaire comportant un boîtier (1), un récipient de travail (2) monté amovible sur le boîtier (1), un outil de travail rotatif (3) monté amovible dans le récipient de travail (2), et un couvercle (4) coiffant le récipient de travail (2), le boîtier (1) présentant un axe d'entraînement (12) prévu pour recevoir l'outil de travail rotatif (3), le couvercle (4) étant susceptible d'être mis en place sur le boîtier (1) indépendamment de l'outil de travail rotatif (3), le couvercle (4) comportant un organe de commande (40) formé par un bord périphérique inférieur (41), l'organe de commande (40) étant prévu pour actionner un élément de commande (15) mobile entre une position de repos et une position de fonctionnement, le couvercle (4) comportant un organe de sécurité inférieur (43) laissant l'outil de travail rotatif (3) libre en rotation lorsque le couvercle (4) est en place sur le boîtier (1), **caractérisé en ce que** l'élément de commande (15) est mobile entre une position relevée de repos et une position abaissée de fonctionnement, **en ce que** le couvercle (4) et le boîtier (10) entourent l'outil de travail rotatif (3) lorsque le bord périphérique inférieur (41) repose sur l'élément de commande (15), et **en ce que** l'organe de sécurité inférieur (43) coopérant avec une partie supérieure (35) de l'outil de travail rotatif (3) en place sur l'axe d'entraînement (12) provoque une inclinaison du couvercle (4) sur le boîtier (1) écartant le bord périphérique inférieur (41) du couvercle (4) de la position abaissée de fonctionnement de l'élément de commande (15).

2. Appareil de préparation culinaire selon la revendication 1, **caractérisé en ce que** l'inclinaison du couvercle (4) en place sur le boîtier (1) est limitée par un organe de sécurité latéral (42) du couvercle (4) coopérant avec une partie latérale (34) de l'outil de travail rotatif (3).

3. Appareil de préparation culinaire selon l'une des revendications 1 ou 2, **caractérisé en ce que** l'élément de commande (15) est adjacent à un bord périphérique supérieur (10) du boîtier (1).

4. Appareil de préparation culinaire selon la revendication 3, **caractérisé en ce que** le bord périphérique inférieur (41) du couvercle (4) est inséré à l'intérieur du bord périphérique supérieur (10) du boîtier (1).

5. Appareil de préparation culinaire selon l'une des revendications 1 à 4, **caractérisé en ce que** le bord périphérique inférieur (41) du couvercle (4) présente une géométrie circulaire.

6. Appareil de préparation culinaire selon l'une des revendications 1 à 5, **caractérisé en ce que** le boîtier (1) présente une rainure de guidage latérale (17) prévue pour recevoir le bord périphérique inférieur (41) du couvercle (4) disposé axialement sur le boîtier (1), l'élément de commande (15) étant agencé dans la rainure de guidage latérale (17), le bord périphérique inférieur (41) du couvercle (4) prenant appui contre une paroi de la rainure de guidage latérale (17) sans actionner l'élément de commande (15) vers la position abaissée de fonctionnement lorsque le couvercle (4) est incliné par rapport au boîtier (1) et que l'organe de sécurité inférieur (43) coopère avec la partie supérieure (35) de l'outil de travail rotatif (3).

7. Appareil de préparation culinaire selon la revendication 6, **caractérisé en ce que** le bord périphérique inférieur (41) du couvercle (4) est susceptible de prendre appui sur une protubérance latérale (9) agencée dans la rainure de guidage latérale (17) sans actionner l'élément de commande (15) vers la position abaissée de fonctionnement lorsque le couvercle (4) est incliné par rapport au boîtier (1) et que l'organe de sécurité inférieur (43) coopère avec la partie supérieure (35) de l'outil de travail rotatif (3).

8. Appareil de préparation culinaire selon la revendication 7, **caractérisé en ce que** le bord périphérique inférieur (41) du couvercle (4) est susceptible de prendre appui sur deux protubérances latérales (9) agencées de part et d'autre de l'élément de commande (15) dans la rainure de guidage latérale (17) sans actionner l'élément de commande (15) vers la position abaissée de fonctionnement lorsque le couvercle (4) est incliné par rapport au boîtier (1) et que l'organe de sécurité inférieur (43) coopère avec la partie supérieure (35) de l'outil de travail rotatif (3).

9. Appareil de préparation culinaire selon l'une des revendications 1 à 8, **caractérisé en ce que** l'organe de sécurité inférieur (43) entoure la partie supérieure (35) de l'outil de travail rotatif (3) lorsque le couvercle (4) repose sur le boîtier (1).

10. Appareil de préparation culinaire selon l'une des revendications 1 à 9, **caractérisé en ce que** l'axe d'entraînement (12) est proéminent par rapport à une face supérieure (11) du boîtier (1).

11. Appareil de préparation culinaire selon l'une des revendications 1 à 10, **caractérisé en ce que** le couvercle (4) peut être mis en place sur le boîtier (1) sans orientation angulaire particulière.

12. Appareil de préparation culinaire selon l'une des revendications 1 à 11, **caractérisé en ce que** le boîtier (1) comporte un moteur électrique (13) piloté par un interrupteur (14) commandé par l'élément de commande (15).

13. Appareil de préparation culinaire selon l'une des revendications 1 à 12, **caractérisé en ce que** l'élément de commande (15) est monté mobile contre un ressort de rappel (16).

14. Appareil de préparation culinaire selon la revendication 13, **caractérisé en ce que** le bord périphérique inférieur (41) du couvercle (4) disposé axialement sur le boîtier (1) repose sur l'élément de commande (15) et sur deux autres éléments suspenseurs (18, 19).

15. Appareil de préparation culinaire selon la revendication 14, **caractérisé en ce que** l'élément de commande (15) et les deux autres éléments suspenseurs (18, 19) sont espacés de 120° les uns des autres.

## Claims

1. A cooking appliance comprising a housing (1), a working container (2) mounted removably on the housing (1), a rotary working tool (3) mounted removably inside the working container (2), and a lid (4) covering the working container (2), the housing (1) having a drive shaft (12) to receive the rotary working tool (3), the lid (4) being capable of being placed on the housing (1) independently of the rotary working tool (3), the lid (4) comprising a control unit (40) formed by a lower peripheral edge (41), the control unit (40) being capable of actuating a control element (15) that moves between a rest position and an operating position, the lid (4) comprising a lower safety unit (43) allowing the rotary working tool (3) to rotate freely when the lid (4) is placed on the housing (1), **characterised in that** the control element (15) can move between a raised rest position and a lowered operating position, **in that** the lid (4) and the housing (10) surround the rotary working tool (3) when the lower peripheral edge (41) rests on the control element (15), and **in that** the lower safety unit (43) cooperating with an upper portion (35) of the rotary working tool (3) placed on the drive shaft (12) causes an inclination of the lid (4) on the housing (1) separating the lower peripheral edge (41) of the lid (4) from the lowered operating position of the control element (15).

2. A cooking appliance according to claim 1, **characterised in that** the inclination of the lid (4) placed on the housing (1) is limited by a lateral safety unit (42) of the lid (4) cooperating with a lateral portion (34) of the rotary working tool (3).

3. A cooking appliance according to any one of claims 1 or 2, **characterised in that** the control element (15) is adjacent to an upper peripheral edge (10) of the housing (1).

4. A cooking appliance according to claim 3, **characterised in that** the lower peripheral edge (41) of the lid (4) is inserted into the upper peripheral edge (10) of the housing (1).

5. A cooking appliance according to any one of claims 1 to 4, **characterised in that** the lower peripheral edge (41) of the lid (4) has a circular geometry.

6. A cooking appliance according to any one of claims 1 to 5, **characterised in that** the housing (1) has a lateral guide groove (17) to receive the lower peripheral edge (41) of the lid (4) arranged axially on the housing (1), the control element (15) provided in the lateral guide groove (17), the lower peripheral edge (41) of the lid (4) resting against a wall of the lateral guide groove (17) without actuating the control element (15) to the lowered operating position when the lid (4) is inclined in relation to the housing (1) and when the lower safety unit (43) cooperates with the upper portion (35) of the rotary working tool (3).

7. A cooking appliance according to claim 6, **characterised in that** the lower peripheral edge (41) of the lid (4) can rest on a lateral protuberance (9) provided in the lateral guide groove (17) without actuating the control element (15) to the lowered operating position when the lid (4) is inclined in relation to the housing (1) and when the lower safety unit (43) cooperates with the upper portion (35) of the rotary working tool (3).

8. A cooking appliance according to claim 7, **characterised in that** the lower peripheral edge (41) of the lid (4) can rest on two lateral protuberances (9) provided on either side of the control element (15) in the lateral guide groove (17) without actuating the control element (15) to the lowered operating position when the lid (4) is inclined in relation to the housing (1) and when the lower safety unit (43) cooperates with the upper portion (35) of the rotary working tool (3).

9. A cooking appliance according to any one of claims 1 to 8, **characterised in that** the lower safety unit (43) surrounds the upper portion (35) of the rotary working tool (3) when the lid (4) rests on the housing (1).

10. A cooking appliance according to any one of claims 1 to 9, **characterised in that** the drive shaft (12) is raised compared to an upper face (11) of the housing (1).

11. A cooking appliance according to any one of claims 1 to 10, **characterised in that** the lid (4) can be placed on the housing (1) without any particular angular orientation.

12. A cooking appliance according to any one of claims 1 to 11, **characterised in that** the housing (1) comprises an electric motor (13) driven by a switch (14) controlled by the control element (15).

13. A cooking appliance according to any one of claims 1 to 12, **characterised in that** the control element (15) is movably mounted against a return spring (16).

14. A cooking appliance according to claim 13, **characterised in that** the lower peripheral edge (41) of the lid (4) arranged axially on the housing (1) rests on the control element (15) and on two other suspension elements (18, 19).

15. A cooking appliance according to claim 14, **characterised in that** the control element (15) and the two other suspension elements (18, 19) are spaced 120° from each other.

## Patentansprüche

1. Gerät für kulinarische Zubereitungen, umfassend ein Gehäuse (1), einen Arbeitsbehälter (2), der abnehmbar auf dem Gehäuse (1) befestigt ist, ein drehendes Arbeitswerkzeug (3), das abnehmbar im Arbeitsbehälter (2) befestigt ist, und einen Deckel (4), der den Arbeitsbehälter (2) abdeckt, wobei das Gehäuse (1) eine Antriebsachse (12) aufweist, die für die Aufnahme des drehenden Arbeitswerkzeuges (3) vorgesehen ist, wobei der Deckel (4) unabhängig vom drehenden Arbeitswerkzeug (3) auf das Gehäuse (1) aufgesetzt werden kann, wobei der Deckel (4) ein Betätigungsglied (40) umfasst, das von einem unteren umlaufenden Rand (41) gebildet wird, wobei das Betätigungsglied (40) zum Betätigen eines Betätigungselements (15) vorgesehen ist, das zwischen einer Ruheposition und einer Betriebsposition beweglich ist, wobei der Deckel (4) ein unteres Sicherheitsglied (43) aufweist, welches das drehende Arbeitswerkzeug (3) frei drehen lässt, wenn sich der Deckel (4) auf dem Gehäuse (1) befindet, **dadurch gekennzeichnet, dass** das Betätigungselement (15) zwischen einer erhöhten Ruheposition und einer abgesenkten Betriebsposition beweglich ist, und dadurch, dass der Deckel (4) und das Gehäuse (10) das drehende Arbeitswerkzeug (3) umgeben, wenn der untere umlaufende Rand (41) auf dem Betätigungselement (15) aufliegt, und dadurch, dass das untere Sicherheitsglied (43), das mit einem Oberteil (35) des auf der Antriebsachse (12) aufgesetzten, drehenden Arbeitswerkzeuges (3) zusammenwirkt, eine Neigung des Deckels (4) auf dem Gehäuse (1) verursacht, wobei der untere umlaufende Rand (41) des Deckels (4) von der abgesenkten Betriebsposition des Betätigungselements (15) entfernt wird.

2. Gerät für kulinarische Zubereitungen nach Anspruch 1, **dadurch gekennzeichnet, dass** die Neigung des auf dem Gehäuse (1) aufgesetzten Deckels (4) von einem seitlichen Sicherheitsglied (42) des Deckels (4) begrenzt wird, das mit einem Seitenteil (34) des drehenden Arbeitswerkzeuges (3) zusammenwirkt.

3. Gerät für kulinarische Zubereitungen nach einem der Ansprüche 1 oder 2, **dadurch gekennzeichnet, dass** das Betätigungselement (15) an einen oberen umlaufenden Rand (10) des Gehäuses (1) angrenzt.

4. Gerät für kulinarische Zubereitungen nach Anspruch 3, **dadurch gekennzeichnet, dass** der untere umlaufende Rand (41) des Deckels (4) innerhalb des oberen umlaufenden Randes (10) des Gehäuses (1) eingefügt wird.

5. Gerät für kulinarische Zubereitungen nach einem der Ansprüche 1 bis 4, **dadurch gekennzeichnet, dass** der untere umlaufende Rand (41) des Deckels (4) eine kreisförmige Geometrie aufweist.

6. Gerät für kulinarische Zubereitungen nach einem der Ansprüche 1 bis 5, **dadurch gekennzeichnet, dass** das Gehäuse (1) eine seitliche Führungsrille (17) aufweist, die für die Aufnahme des unteren umlaufenden Randes (41) des Deckels (4) vorgesehen ist, der axial auf dem Gehäuse (1) angeordnet ist, wobei das Betätigungselement (15) in der seitlichen Führungsrille (17) angeordnet ist, wobei der untere umlaufende Rand (41) des Deckels (4) gegen eine Wand der seitlichen Führungsrille (17) drückt, ohne das Betätigungselement (15) in die abgesenkte Betriebsposition zu versetzen, wenn der Deckel (4) in Bezug auf das Gehäuse (1) geneigt ist und das untere Sicherheitsglied (43) mit dem Oberteil (35) des drehenden Arbeitswerkzeuges (3) zusammenwirkt.

7. Gerät für kulinarische Zubereitungen nach Anspruch 6, **dadurch gekennzeichnet, dass** der untere umlaufende Rand (41) des Deckels (4) an einen seitlichen Vorsprung (9) gedrückt werden kann, der in der seitlichen Führungsrille (17) angeordnet ist, ohne das Betätigungselement (15) in die abgesenkte Betriebsposition zu versetzen, wenn der Deckel (4) in Bezug auf das Gehäuse (1) geneigt ist und das untere Sicherheitsglied (43) mit dem Oberteil (35) des drehenden Arbeitswerkzeuges (3) zusammenwirkt.

8. Gerät für kulinarische Zubereitungen nach Anspruch 7, **dadurch gekennzeichnet, dass** der untere umlaufende Rand (41) des Deckels (4) an zwei seitliche Vorsprünge (9) gedrückt werden kann, die auf jeder Seite des Betätigungselements (15) in der seitlichen Führungsrille (17) angeordnet sind, ohne das Betätigungselement (15) in die abgesenkte Betriebsposition zu versetzen, wenn der Deckel (4) in Bezug auf das Gehäuse (1) geneigt ist und das untere Sicherheitsglied (43) mit dem Oberteil (35) des drehenden Arbeitswerkzeuges (3) zusammenwirkt.

9. Gerät für kulinarische Zubereitungen nach einem der Ansprüche 1 bis 8, **dadurch gekennzeichnet, dass** das untere Sicherheitsglied (43) den Oberteil (35) des drehenden Arbeitswerkzeuges (3) umgibt, wenn der Deckel (4) auf dem Gehäuse (1) aufliegt.

10. Gerät für kulinarische Zubereitungen nach einem der Ansprüche 1 bis 9, **dadurch gekennzeichnet, dass** die Antriebsachse (12) in Bezug auf eine Oberseite (11) des Gehäuses (1) vorspringend ist.

11. Gerät für kulinarische Zubereitungen nach einem der Ansprüche 1 bis 10, **dadurch gekennzeichnet, dass** der Deckel (4) auf das Gehäuse (1) ohne besondere winkelmäßige Ausrichtung aufgesetzt werden kann.

12. Gerät für kulinarische Zubereitungen nach einem der Ansprüche 1 bis 11, **dadurch gekennzeichnet, dass** das Gehäuse (1) einen Elektromotor (13) umfasst, der von einem Schalter (14) gesteuert wird, der vom Betätigungselement (15) betätigt wird.

13. Gerät für kulinarische Zubereitungen nach einem der Ansprüche 1 bis 12, **dadurch gekennzeichnet, dass** das Betätigungselement (15) beweglich gegen eine Rückholfeder (16) befestigt ist.

14. Gerät für kulinarische Zubereitungen nach Anspruch 13, **dadurch gekennzeichnet, dass** der untere umlaufende Rand (41) des Deckels (4), der axial auf dem Gehäuse (1) angeordnet ist, auf dem Betätigungselement (15) und auf zwei anderen Federungselementen (18, 19) aufliegt.

15. Gerät für kulinarische Zubereitungen nach Anspruch 14, **dadurch gekennzeichnet, dass** das Betätigungselement (15) und die zwei anderen Federungselemente (18,19) 120° voneinander beabstandet sind.
